# EUROPEAN PATENT APPLICATION

(11) **EP 4 397 868 A1**
(43) Date of publication of application: **10.07.2024**
(21) Application number: 22927923.7
(22) Date of filing: 28.02.2022
(51) Int. Cl.: F16B 19/10, F16B 5/04

(54) **RIVETED ASSEMBLY, BATTERY, ELECTRIC DEVICE, AND ASSEMBLING METHOD AND APPARATUS FOR RIVETED ASSEMBLY**

(71) Applicant: Contemporary Amperex Technology Co., Limited, Ningde, Fujian 352100 (CN)
(72) Inventor: JIA, Feng, Ningde, Fujian 352100 (CN); HUANG, Shengguo, Ningde, Fujian 352100 (CN); LIN, Zhiqiang, Ningde, Fujian 352100 (CN); MEI, Min, Ningde, Fujian 352100 (CN)
(74) Representative: Herrmann, Uwe
(86) International application number: PCT/CN2022/078487
(87) International publication number: WO 2023/159642

(57) **Abstract**

The present application provides a riveting assembly, a battery, electrical equipment, and an assembling method and equipment of the riveting assembly, and relates to the technical field of batteries. The riveting assembly includes a first member, a second member and a riveting piece; the first member has a first connecting portion; the second member has a first hollow portion, and the second member has a first wall and a second wall opposed to each other; a rivet body of the riveting piece is configured to sequentially pass through the first wall, the first hollow portion, the second wall and the first connecting ortion; in an axial direction of the rivet body, the rivet body has a first weak portion and a first limiting portion which are disposed at intervals, and the first weak portion protrudes in a radial direction of the rivet body when the rivet body is axially stressed to form a second limiting portion, so that the first connecting portion and the second wall are connected between the first limiting portion and the second limiting portion to lock the second wall and the first connecting portion, thereby reducing a risk of relative shaking of the first member and the second member, and improving the connection stability between the first member and the second member.

## Description

### TECHNICAL FIELD

The present application relates to the technical field of batteries, in particular to a riveting assembly, a battery, electrical equipment, and assembling method and equipment of the riveting assembly.

### BACKGROUND ART

At present, lithium-ion batteries are generally used in vehicles. As a rechargeable battery, the lithium-ion batteries have advantages of small size, high energy density, high power density, many cycle times and long storage time.

The battery generally includes a box body and a battery cell, and the battery cell is accommodated in the box body. In order to improve stability of the battery cell in the box body, a mounting bracket is disposed in the box body to limit the battery cell in the box body, so as to improve the stability of the battery cell in the box body. The connection stability between the mounting bracket and the box body is also one of the important factors affecting the stability of the battery cell in the box body. Therefore, how to improve the connection stability between the box body and the mounting bracket is an urgent problem to be solved in the field of battery technologies.

### SUMMARY OF THE INVENTION

An embodiment of the present application provides a riveting assembly, a battery box, a battery, electrical equipment, and an assembly method and equipment of the riveting assembly, so as to improve connection stability between a box body and a mounting bracket.

In the first aspect, an embodiment of the present application provides a riveting assembly, including a first member, a second member and a riveting piece; the first member has a first connecting portion; the second member has a first hollow portion, and the second member has a first wall and a second wall opposed to each other; the riveting piece includes a rivet body, the rivet body is configured to sequentially pass through the first wall, the first hollow portion, the second wall and the first connecting portion, and the first connecting portion is located on one side of the second wall facing away from the first wall; wherein in an axial direction of the rivet body, the rivet body has a first weak portion and a first limiting portion which are disposed at intervals, and the first weak portion is configured to protrude in a radial direction of the rivet body when the rivet body is stressed in the axial direction of the rivet body, so as to form a second limiting portion located in the first hollow portion, so that the first connecting portion and the second wall are connected between the first limiting portion and the second limiting portion.

In the above technical solution, the rivet body of the riveting piece can sequentially pass through the first wall, the first hollow portion, the second wall and the first connecting portion, so that the first weak portion is located in the first hollow portion, and the first limiting portion is located on one side of the first connecting portion facing away from the second wall. By axially applying force to the rivet body, the first weak portion protrudes in the radial direction of the rivet body to form the second limiting portion, a limiting space is formed between the first limiting portion and the second limiting portion, so as to lock the second wall and the first connecting portion, thereby realizing the connection between the first member and the second member. Therefore, the riveting piece can stretch into the first hollow portion and limit and lock the second wall and the first connecting portion in the first hollow portion, thereby reducing a risk of relative shaking of the first member and the second member due to a gap between the second wall and the first connecting portion, and improving the connection stability between the first member and the second member. Moreover, the riveting piece can stretch into a relatively concealed space to realize locking, such as stretching into the first hollow portion, so that an application range of the riveting piece is wider.

In some embodiments of the first aspect of the present application, the rivet body is further provided with a second weak portion, and the second weak portion is configured to protrude in the radial direction of the rivet body when the rivet body is stressed in the axial direction of the rivet body, so as to form the first limiting portion.

In the above technical solution, the first limiting portion is formed by protruding and deforming of the second weak portion in the radial direction of the rivet body after the rivet body is axially stressed. Before the second weak portion deforms, the second weak portion has a small size in the radial direction of the rivet body, which facilitates the rivet body to pass through the first wall, the first hollow portion, the second wall and the first connecting portion, and facilitates the formation of the first limiting portion on one side of the first connecting portion facing away from the second wall so as to play a limiting role on the first connecting portion.

In some embodiments of the first aspect of the present application, a stiffness of the first weak portion is smaller than a stiffness of the second weak portion.

In the above technical solution, the stiffness of the first weak portion is smaller than the stiffness of the second weak portion, in a process of axially applying force to the rivet body, the first weak portion will deform prior to the second weak portion, and a distance between the first weak portion and the rivet body in a direction approaching from the first weak portion to the second weak portion remains unchanged during the force application process, which facilitates the deformation of the first weak portion of the rivet body into the second limiting portion by press riveting, thereby facilitating rivet of the first member and the second member through the riveting piece.

In some embodiments of the first aspect of the present application, a wall thickness of the first weak portion is smaller than a wall thickness of the second weak portion, so that the stiffness of the first weak portion is smaller than the stiffness of the second weak portion.

In the above technical solution, by setting the wall thickness of the first weak portion to be smaller than the wall thickness of the second weak portion, the stiffness of the first weak portion is smaller than the stiffness of the second weak portion, which facilitates the manufacture and molding of the rivet body of the riveting piece.

In some embodiments of the first aspect of the present application, the rivet body includes a body portion and a riveting portion, the first weak portion and the first limiting portion are both disposed on the body portion, and the riveting portion is connected to the body portion and located on one side of the first limiting portion facing away from the first weak portion; and the rivet body has a second hollow portion, and the riveting portion is used to cooperate with a pull riveting tool that passes through the second hollow portion.

In the above technical solution, the riveting portion is used to cooperate with the pull riveting tool that passes through the second hollow portion, so as to facilitate axially applying force on the rivet body. Moreover, the riveting tool penetrates into the second hollow portion to cooperate with the riveting portion, and no additional riveting space is required to be set.

In some embodiments of the first aspect of the present application, the riveting portion is provided with an internal thread for connecting with the pull riveting tool.

In the above technical solution, the internal thread of the riveting portion is in threaded fit with an external thread of the pull riveting tool, so that the connection between the riveting portion and the pull riveting tool is more convenient.

In some embodiments of the first aspect of the present application, the riveting assembly further includes a third member, and the third member is located on one side of the first wall facing away from the second wall; and the riveting piece further includes a flange portion, and the flange portion is connected to one end of the rivet body and is located on one side of the third member facing away from the first wall.

In the above technical solution, the third member is located on one side of the first wall facing away from the second wall, and the third member can play a limiting role on the second member on one side of the first wall facing away from the second wall; and the flange portion of the riveting piece is located on one side of the third member facing away from the first wall, the flange portion can play a limiting role on the third member, and the cooperation between the flange portion and the first limiting portion can limit the second member between the third member and the first connecting portion of the first member, thereby improving the connection stability between the first member and the second member.

In some embodiments of the first aspect of the present application, the rivet body further includes a third weak portion, the thir weak portion is configured to protrude in the radial direction of the rivet body when the rivet body is stressed in the axial direction, so as to form a third limiting portion, and the third limiting portion is configured to fill a gap between the first wall and the third member.

In the above technical solution, the third weak portion deforms to form a third limiting portion, and the third limiting portion fills the gap between the first wall and the third member, so that the possibility of movement of the third member and the first wall in the axial direction of the rivet body is small, and the stability of the connection among the first member, the second member and the third member is improved.

In some embodiments of the first aspect of the present application, the rivet body further has a third weak portion, and the third weak portion is configured to protrude in the radial direction of the rivet body when the rivet body is stressed in the axial direction, so as to form the third limiting portion, so that the third member and the first wall are connected between the flange portion and the third limiting portion.

In the above technical solution, the third weak portion deforms to form the third limiting portion, and the first wall and the third member are limited between the first limiting portion and the flange portion, which is conducive to maintaining a fixed relative position relationship between the first wall and the third member, thereby improving the connection stability of the first wall and the third member.

In some embodiments of the first aspect of the present application, a stiffness of the third weak portion is greater than the stiffness of the second weak portion.

In the above technical solution, the stiffness of the second weak portion is smaller than the stiffness of the third weak portion, in a process of axially applying force to the rivet body, the second weak portion will deform prior to the third weak portion, so that the second limiting portion formed by deforming of the first weak portion is limited on one side of the second wall facing away from the first connecting portion, and the second limiting portion can abut against one side of the second wall facing away from the first connecting portion, and can provide support for press riveting of the riveting piece, thereby facilitating the press riveting of the riveting piece to make the third weak portion deform into the third limiting portion.

In some embodiments of the first aspect of the present application, a wall thickness of the third weak portion is greater than the wall thickness of the second weak portion, so that the stiffness of the third weak portion is greater than the stiffness of the second weak portion.

In the above technical solution, by setting the wall thickness of the second weak portion to be smaller than the wall thickness of the third weak portion, the stiffness of the second weak portion is smaller than the stiffness of the third weak portion, which facilitates the manufacture and molding of the rivet body of the riveting piece.

In some embodiments of the first aspect of the present application, the rivet body has a second hollow portion, an inner surface of the rivet body is provided with a first groove, and the rivet body forms the first weak portion in an area of the first groove.

In the above technical solution, the inner surface of the rivet body is provided with the first groove, so that the wall thickness of the area of the first groove is smaller than a wall thickness of other non-weak portions of the rivet body, so that the area of the first groove correspondingly forms the first weak portion, and a forming mode of the first weak portion is simple, thereby reducing the manufacturing difficulty of the riveting piece.

In some embodiments of the first aspect of the present application, the first groove is a closed structure extending in a circumferential direction of the rivet body.

In the above technical solution, the first groove is the closed structure extending in the circumferential direction of the rivet body, then the first weak portion can protrude along the periphery and form the closed second limiting portion extending in the circumferential direction of the rivet body, which can better play a limiting role on the second wall.

In some embodiments of the first aspect of the present application, the riveting assembly is a battery box, the first member is formed with an accommodating space for a battery cell, the second member is accommodated in the accommodating space, and the second member is used to divide the accommodating space into a subspace accommodating the battery cell.

In the above technical solution, the first member is the box body of the battery box, the second memberis the mounting bracket of the battery box, the riveting piece of the battery box can stretch into the first hollow portion and limit and lock the second wall and the first connecting portion in the first hollow portion, thereby reducing the risk of relative shaking of the first member and the second member due to the gap between the second wall and the first connecting portion, namely, improving the connection stability between the box body and the mounting bracket, thereby improving the mounting stability of the battery cell mounted in the subspace.

In a third aspect, an embodiment of the present application provide a battery, including a battery cell and a battery box provided by the above embodiment.

In the above technical solution, the battery includes the battery box provided by the above embodiment, so that a connection relationship between a box body of the battery box and the mounting bracket is stable, thereby improving mounting stability of the battery cell in the battery box.

In a third aspect, an embodiment of the present application provides electrical equipment, including the battery provided by the embodiment of the third aspect.

In a fourth aspect, an embodiment of the present application provides an assembling method of a riveting assembly, including:
providing a first member, a second member and a riveting piece, wherein the first member has a first connecting portion; the second member has a first hollow portion, the second member has a first wall and a second wall opposed to each other, and the first connecting portion is located on one side of the second wall facing away from the first wall; and the riveting piece includes a rivet body, and in an axial direction of the rivet body, the rivet body has a first weak portion and a first limiting portion which are disposed at intervals;
passing the rivet body sequentially through the first wall, the first hollow portion, the second wall and the first connecting portion; and
performing press riveting on the riveting piece, so that the first weak portion protrudes in a radial direction of the rivet body to form a second limiting portion, and thus the first connecting portion and the second wall are connected between the first limiting portion and the second limiting portion.

In the above technical solution, the rivet body of the riveting piece sequentially passes through the first wall, the first hollow portion, the second wall and the first connecting portion, so that the first weak portion is located in the first hollow portion, and the first limiting portion is located on one side of the first connecting portion facing away from the second wall. By performing press riveting on the rivet body, the first weak portion protrudes in the radial direction of the rivet body to form the second limiting portion, a limiting space is formed between the first limiting portion and the second limiting portion, so as to lock the second wall and the first connecting portion, thereby realizing the connection between the first member and the second member. Therefore, through the method, the riveting piece can stretch into the first hollow portion and limit and lock the second wall and the first connecting portion in the first hollow portion, thereby reducing a risk of relative shaking of the first member and the second member due to a gap between the second wall and the first connecting portion, and improving the connection stability between the first member and the second member. Moreover, the riveting piece can stretch into a relatively concealed space to realize locking, such as stretching into the first hollow portion, so that an application range of the riveting piece is wider.

In some embodiments of the fifth aspect of the present application, the rivet body is further provided with a second weak portion.

The assembling method of the riveting assembly further includes:
performing pull riveting on the riveting piece, so that the second weak portion protrudes in the radial direction of the rivet body to form the first limiting portion.

In the above technical solution, in a process that the second weak portion deforms to form the first limiting portion, one end of the rivet body in a direction approaching from the first weak portion to the first limiting portion will move toward a direction close to the first connecting portion, by performing pull riveting on the riveting piece, it is possible to adapt to the movement of the end of the rivet body, thereby ensuring that the second weak portion deforms into the reliable first limiting portion.

In some embodiments of the fifth aspect of the present application, the riveting assembly further includes a third member.

The assembling method of the riveting assembly further includes:
providing the third member and positioning the third member on one side of the first wall facing away from the second wall.

The riveting piece further includes a flange portion, the flange portion is connected to one end of the rivet body and located on one side of the third member facing away from the first wall, the rivet body further includes a third weak portion, the third weak portion is disposed close to the flange portion relative to the first weak portion.

The assembling method of the riveting assembly further includes:
performing press riveting on the riveting piece, so that the third weak portion protrudes in the radial direction of the rivet body to form a third limiting portion, wherein the third limiting portion is configured to fill a gap between the first wall and the third member, or the third limiting portion is configured to cooperate with the flange portion to connect the third member and the first wall between the flange portion and the third limiting portion.

In the above technical solution, by performing press riveting on the riveting piece, it is convenient for a riveting tool to apply an axial force to the riveting piece, thereby improving the assembling convenience and assembling efficiency. The third limiting portion fills the gap between the first wall and the third member or the third limiting portion and the flange portion jointly limit the first wall and the third member, both of which can reduce the risk of shaking of the first wall and the third member in the axial direction of the rivet body, thereby improving the mounting stability of the first wall and the third member.

In a fifth aspect, an embodiment of the present application provides assembling equipment of a riveting assembly, including a providing apparatus and an assembling apparatus, wherein the providing apparatus is configured to provide a first member, a second member and a riveting piece; the first member has a first connecting portion; the second member has a first hollow portion, the second member has a first wall and a second wall opposed to each other, and the first connecting portion is located on one side of the second wall facing away from the first wall; the riveting piece includes a rivet body, and in an axial direction of the rivet body, the rivet body has a first weak portion and a first limiting portion which are disposed at intervals; the assembling apparatus is configured to sequentially pass the rivet body through the first wall, the first hollow portion, the second wall and the first connecting portion, and apply force in an axial direction of the rivet body, so that the first weak portion protrudes in a radial direction of the rivet body to form a first limiting portion, and the first connecting portion and the second wall are connected between the first limiting portion and the second limiting portion.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a simplified structural view of an existing battery box;
Fig. 2 is a schematic structural diagram of a vehicle provided by some embodiments of the present application;
Fig. 3 is a schematic structural diagram of a battery provided by some embodiments of the present application;
Fig. 4 is a schematic structural diagram of a riveting assembly provided by some embodiments of the present application;
Fig. 5 is an enlarged view of a position I in Fig. 4;
Fig. 6 is a partial sectional view of a riveting assembly provided by some embodiments of the present application (a first weak portion, a second weak portion and a third weak portion do not deform along a radial convex portion of a rivet body);
Fig. 7 is a schematic structural diagram of a riveting piece provided by some other embodiments of the present application;
Fig. 8 is a sectional view of a riveting assembly provided by some embodiments of the present application (a first weak portion deforms into a second limiting portion);
Fig. 9 is a sectional view of a riveting assembly provided by some embodiments of the present application (a first weak portion deforms into a second limiting portion, and a second weak portion deforms into a first limiting portion);
Fig. 10 is a sectional view of a riveting assembly provided by some embodiments of the present application (a third limiting portion fills a gap between a first wall and a third member);
Fig. 11 is a sectional view of a riveting assembly provided by some embodiments of the present application (there is no gap between a first wall and a third member, and a third weak portion does not deform into a third limiting portion);
Fig. 12 is a sectional view of a riveting assembly provided by some embodiments of the present application (a third weak portion deforms into a third limiting portion and is located on one side of a first wall facing away from a third member);
Fig. 13 is a schematic structural diagram of a riveting piece provided by some embodiments of the present application;
Fig. 14 is a flowchart of an assembling method of a riveting assembly provided by some embodiments of the present application; and
Fig. 15 is a schematic structural diagram of assembling equipment of a riveting assembly provided by some embodiments of the present application.

Icons: 1000-Vehicle; 100-Battery; 10-Riveting assembly; 11-First member; 111-Accommodating space; 1111-Subspace; 1112-Opening; 112-First connecting portion; 113-First contour portion; 114-First bottom plate portion; 115-First reinforcing rib; 116-First supporting portion; 1161-First abutting portion; 12-Second member; 121-First hollow portion; 122-First wall; 123-Second wall; 124-First insertion hole; 13-Riveting piece; 131-Rivet body; 1311-First weak portion; 1312-Firstlimiting portion; 1312a-First limiting surface; 1312b-First guide surface; 1313-Second limiting portion; 1314-Second weak portion; 1315-Second hollow portion; 1316-Body portion; 13161-First groove; 13162-Second groove; 13163-Third groove; 1317-Riveting portion; 1318-Third weak portion; 1319-Third limiting portion; 132-Flange portion; 14-Third member; 141-Second insertion hole; 15-Nut; 151-Threaded hole; 152-First protruding portion; 153-Second protruding portion; 16-Gap; 20-Battery cell; 30-Box cover; 200-Controller; 300-Motor; 2000-Assembling equipment of riveting assembly; 2100-Providing apparatus; 2200-Assembling apparatus.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the embodiments of the present application rather than all the embodiments. The assembly of the embodiments of the present application generally described and illustrated in the drawings herein can be arranged and designed in a variety of different configurations.

Accordingly, the following detailed description of the embodiments of the present application provided in the drawings is not intended to limit the scope of the claimed present application, but merely represents selected embodiments of the present application. Based on the embodiments in the present application, all other embodiments obtained by those of ordinary skill in the art without creative effort fall within the protection scope of the present application.

It should be noted that in case of no conflicts, the embodiments in the present application and the features in the embodiments may be combined with each other.

It should be noted that like numerals and letters denote similar items in the following drawings, therefore, once an item is defined in one drawing, it does not require further definition and explanation in subsequent drawings.

In the description of the embodiments of the present application, it should be noted that the indication of orientation or positional relationship is orientation or positional relationship shown based on drawings, or is the orientation or positional relationship commonly placed during the use of the product of the present application, or is the orientation or positional relationship commonly understood by those skilled in the art. It is only for the convenience of describing the present application and simplifying the description, rather than indicating or implying that the apparatus or component referred to must have a specific orientation, or be constructed and operated in a specific orientation, therefore it cannot be understood as a limitation on the present application. In addition, terms "first", "second" and "third" are used to distinguish description only, and cannot be construed as indicating or implying relative importance.

At present, from the perspective of the development of the market situation, a power battery is more and more widely used. The power battery is used in energy storage power source systems such as hydraulic, thermal, wind and solar power stations, in electric vehicles such as an electric bicycle, an electric motorcycle and an electric car, in military equipment and aerospace, and many other fields. With the continuous expansion of the application field of the power battery, the market quantity demand is also constantly expanding.

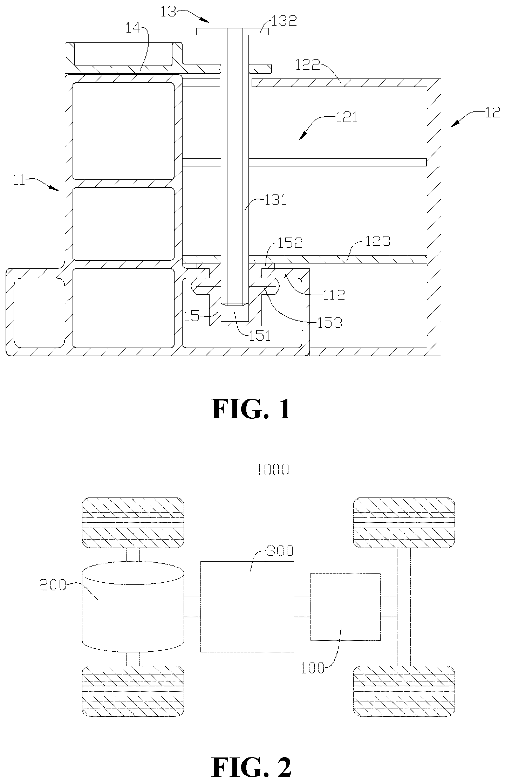

As shown in Fig. 1, a battery box of an existing battery includes first member 11, second member 12 and third member 14. First member 11 has first connecting portion 112, and first member 11 is formed with accommodating space 111 for accommodating battery cell 20. Second member 12 is mounted in accommodating space 111 and connected with first member 11, and second member 12 is used to divide accommodating space 111 into subspace 1111 for accommodating battery cell 20. First member 11 has first connecting portion 112, second member 12 has first hollow portion 121 and is formed with first wall 122 and second wall 123 which are arranged oppositely, and first connecting portion 112 of first member 11 is located on one side of second wall 123 facing away from first wall 122. Third member is connected with first member 11, and a part of third member 14 extends to one side of first wall 122 facing away from second wall 123.

Battery 100 further includes a riveting member, and the riveting member is used for connecting first member 11, second member 12 and third member 14 as a whole. The riveting member includes riveting piece 13 and nut 15.

Nut 15 has threaded hole 151, first protruding portion 152 and a deformation portion, nut 15 is provided with first protruding portion 152 at its opening end, and a diameter of first protruding portion 152 is greater than an outer diameter of nut 15. One end of nut 15 facing away from first protruding portion 152 passes through first connecting portion 112 of first member 11, and first protruding portion 152 is located on one side of first connecting portion 112 facing second wall 123. A deforming portion of nut 15 protrudes in a radial direction of nut 15 by pull riveting or press riveting to form second protruding portion 153, second protruding portion 153 is located on one side of first connecting portion 112 facing away from second wall 123, and first protruding portion 152 and second protruding portion 153 abut against two sides of first connecting portion 112 respectively, so that nut 15 is fixed to first connecting portion 112.

Riveting piece 13 includes rivet body 131 and flange portion 132, and flange portion 132 is disposed at one axial end of rivet body 131. After nut 15 is fixed on first connecting portion 112, rivet body 131 sequentially passes through third member 14, first wall 122, first hollow portion 121, second wall 123 and first connecting portion 112, to make flange portion 132 be located on one side of third member 14 facing away from first wall 122. An end of rivet body 131 facing away from flange portion 132 is screwed into threaded hole 151 of nut 15. Therefore, nut 15, rivet body 131 and flange portion 132 together limit second member 12 between third member 14 and first connecting portion 112.

An inventor found that since second member 12 has first hollow portion 121, nut 15 cannot form a limiting portion on one side of second wall 123 facing away from first connecting portion 112, nor can it form limiting on one side of first wall 122 facing away from a connecting piece, resulting in a risk of movement of second member 12 between third member 14 and first connecting portion 112. And after a long time of use, a screw connection relationship between rivet body 131 and nut 15 will fail, thus resulting in failure of a connection relationship between first member 11, second member 12 and third member 14.

Based on the above considerations, in order to alleviate a problem that second member 12 may move relative to first member 11, connection stability between first member 11 and second member 12 is improved. After in-depth research, the inventor relates to riveting assembly 10. Riveting assembly 10 includes first member 11 and second member 12, and first member 11 has first connecting portion 112; second member 12 has first hollow portion 121, and second member 12 has first wall 122 and second wall 123 opposed to each other; and rivet body 131 of riveting piece 13 is provided with first limiting portion 1312 and first weak portion 1311 at intervals.

Rivet body 131 of riveting piece 13 sequentially passes through first wall 122, first hollow portion 121, second wall 123 and first connecting portion 112, so that first weak portion 1311 is located in first hollow portion 121, and first limiting portion 1312 is located on one side of first connecting portion 112 facing away from second wall 123. By axially applying force to rivet body 131, first weak portion 1311 protrudes in the radial direction of rivet body 131 to form second limiting portion 1313, a limiting space is formed between first limiting portion 1312 and second limiting portion 1313, so as to lock second wall 123 and first connecting portion 112, thereby realizing the connection between first member 11 and second member 12.

Therefore, riveting piece 13 can stretch into first hollow portion 121 and limit and lock second wall 123 and first connecting portion 112 in first hollow portion 121, thereby reducing a risk of relative shaking of first member 11 and second member 12 due to a gap between second wall 123 and first connecting portion 112, and improving the connection stability between first member 11 and second member 12. Moreover, riveting piece 13 can stretch into a relatively concealed space to realize locking, such as stretching into first hollow portion 121, so that an application range of riveting piece 13 is wider.

Riveting assembly 10 disclosed in the embodiment of the present application may be used, but not limited to, in a battery, and electrical apparatus such as a vehicle, a ship, or an aircraft. The battery disclosed in the present application can be used to form a power supply system of the electrical equipment. In this way, it is beneficial to have a stable connection relationship between the box body of the battery box and the mounting bracket, thereby improving the mounting stability of the battery cell in the box body.

Riveting assembly 10 described in the embodiment of the present application is suitable for battery 100, and electrical equipment using battery 100. Hereinafter, a related structure of riveting assembly 10 is illustrated by taking riveting assembly 10 used in the battery box of battery 100 as an example.

The electrical equipment may be a vehicle, a mobile phone, portable equipment, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy and an electric aircraft toy. The electric tool includes a metal cutting electric tool, a grinding electric tool, an assembly electric tool and a railway electric tool, such as an electric drill, an electric grinder, an electric wrench, an electric screwdriver, an electric hammer, an impact drill, a concrete vibrator and an electric planer. The above electrical equipment is not specially limited in the embodiment of the present application.

For the convenience of illustration, the following embodiments take vehicle 1000 as an example to illustrate.

Please refer to Fig. 2, vehicle 1000 is internally provided with battery 100, and battery 100 may be disposed at the bottom or head or tail of vehicle 1000. Battery 100 may be used to power vehicle 1000. For example, battery 100 may be used as an operating power supply of vehicle 1000.

Vehicle 1000 may further include controller 200 and motor 300, and controller 200 is used to control battery 100 to power motor 300, for example, used for meeting a working power demand during starting, navigating and traveling of vehicle 1000.

In some embodiments of the present application, battery 100 not only may serve as an operating power supply of vehicle 1000, but also may serve as a driving power supply of vehicle 1000, thus replacing or partially replacing fuel or natural gas to provide driving power for vehicle 1000.

Please refer to Fig. 2, Fig. 3, and Fig. 4. The battery 100 includes a riveting assembly 10 and a battery cell 20. The riveting assembly 10 includes a first member 11, a second member 12, and a riveting member 13. The first member 11 is formed to accommodate a battery cell. The accommodating space 111 of the body 20. Second member 12 is accommodated in accommodating space 111, and second member 12 is used to divide accommodating space 111 into a plurality of subspaces 1111 for accommodating battery cells 20. Riveting piece 13 is used for riveting first member 11 and second member 12 to form an integral structure.

Accommodating space 111 has opening 1112, and the battery box further includes box cover 30 for covering opening 1112 of first member 11. Box cover 30 and first member 11 jointly define a closed space for accommodating battery cells 20 in the closed space. Of course, in order to improve the sealing performance of the battery box, a connected position between first member 11 and box cover 30 may be sealed by a sealing member (not shown in the figure), and the sealing member may be a sealing ring, a sealant, and the like.

First member 11 and box cover 30 may be in various shapes, such as a cuboid and a cylinder. Box cover 30 may be a hollow structure with one side open to form an accommodating cavity for accommodating battery cell 20. The opening side of the box cover 30 is disposed on an opening side of first member 11. The accommodating cavity and accommodating space 111 jointly define a closed space. Of course, box cover 30 may also be a plate structure, and box cover 30 covers the opening side of first member 11 to form the box body with the closed space.

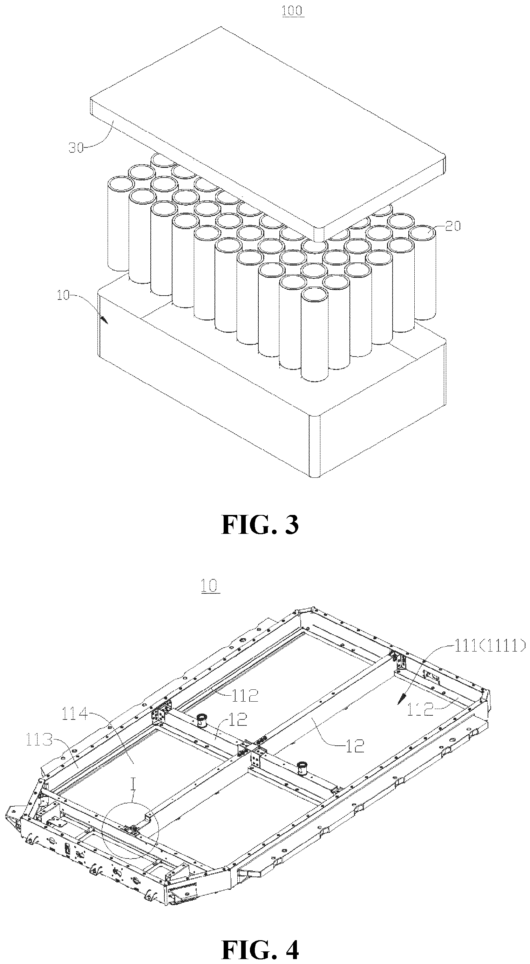

There may be one or more battery cells 20 in battery 100. If there are the plurality of battery cells 20, and the plurality of battery cells 20 may be in series connection or parallel connection or in parallel-series connection, wherein the parallel-series connection means that the plurality of battery cells 20 are connected in both series and parallel. The plurality of battery cells 20 may be directly connected in series, in parallel, or in a parallel-series connection together, and then a whole of the plurality of battery cells 20 is accommodated in first member 11. Of course, it is also possible that the plurality of battery cells 20 are connected in series, in parallel, or in a parallel-series connection to form a battery module, and then the plurality of battery modules are connected in series, in parallel or in a parallel-series connection to form a whole, and accommodated in first member 11. Battery cell 20 may be in a shape of a cylinder, a flat body, a cuboid or others. Fig. 3 exemplarily shows a case where battery cell 20 is a cylinder.

In some embodiments, battery 100 may further include a busbar component (not shown in the figure), and the plurality of battery cells 20 may be electrically connected through the busbar component to achieve series, parallel, or parallel-series connection of the plurality of battery cells 20.

A structure of battery cell 20 may refer to the related art, for example, battery cell 20 may include a case, an electrode assembly and an end cover assembly. The case has an opening, the electrode assembly is accommodated in the case, and the end cover assembly is used to cover the opening.

The case may be in various shapes, such as a cylinder and a cuboid. The shape of the case may be determined according to a specific shape of the electrode assembly. For example, if the electrode assembly is a cylindrical structure, the case may be selected as a cylindrical structure; and if the electrode assembly is a cuboid structure, the case may be selected as a cuboid structure.

The case may also be made of various materials, such as copper, iron, aluminum, stainless steel and an aluminum alloy, which is not particularly limited in the embodiments of the present application.

The electrode assembly may include a positive electrode plate (not shown in the figure), a negative electrode plate (not shown in the figure) and a separator (not shown in the figure). The electrode assembly may be a wound-type structure formed by winding the positive electrode plate, the separator and the negative electrode plate, or may be a stacked-type structure formed by stacking the positive electrode plate, the separator, and the negative electrode plate. The electrode assembly further include a positive tab (not shown in the figure) and a negative tab (not shown in the figure), It may be a positive electrode current collector not coated with a positive electrode active material layer in the positive electrode plate as the positive tab, or a negative electrode current collector not coated with a negative electrode active material layer in the negative electrode plate as the negative tab.

The end cover assembly is used to cover the opening of the case to form a closed mounting space (not shown in the figure), and the mounting space is used to accommodate the electrode assembly. The mounting space is further used to accommodate electrolyte, such as an electrolytic solution. The end cover assembly serves as a part for outputting electrical energy of the electrode assembly. An electrode terminal in the end cover assembly is used to be electrically connected with the electrode assembly, that is, the electrode terminal is electrically connected with the tab of the electrode assembly. For example, the electrode terminal and the tab are connected through a current collecting member, so as to realize an electrical connection between the electrode terminal and the tab.

As shown in Fig. 4, Fig. 5 and Fig. 6, In some embodiments, riveting assembly 10 includes first member 11, second member 12 and riveting piece 13; first member 11 has first connecting portion 112; second member 12 has girst hollow portion 121, and second member 12 has first wall 122 and second wall 123 opposed to each other; riveting piece 13 includes rivet body 131, rivet body 131 is configured to sequentially pass through first wall 122, first hollow portion 121, second wall 123 and first connecting portion 112, and first connecting portion 112 is located on one side of second wall 123 facing away from first wall 122; wherein in an axial direction of rivet body 131, rivet body 131 has first weak portion 1311 and first limiting portion 1312 which are disposed at intervals, first weak portion 1311 is configured to protrude in a radial direction of rivet body 131 when rivet body 131 is stressed in the axial direction of rivet body 131, so as to form second limiting portion 1313 located in first hollow portion 121, so that first connecting portion 112 and second wall 123 are connected between first limiting portion 1312 and second limiting portion 1313.

First member 11 further has first contour portion 113 and first bottom plate portion 114, first contour portion 113 is disposed around first bottom plate portion 114, and first contour portion 113 and first bottom plate portion 114 jointly define accommodating space 111 of first member 11. First member 11 is the box body. Second member 12 is the mounting bracket.

First contour portion 113 is a hollow structure, which can reduce the weight of first member 11. A plurality of first reinforcing ribs 115 arranged at intervals are disposed in first contour portion 113, which can enhance a strength and stiffness of first contour portion 113 and improve a damage resistance and deformation resistance of first contour portion 113. Certainly, first contour portion 113 may also be a solid structure.

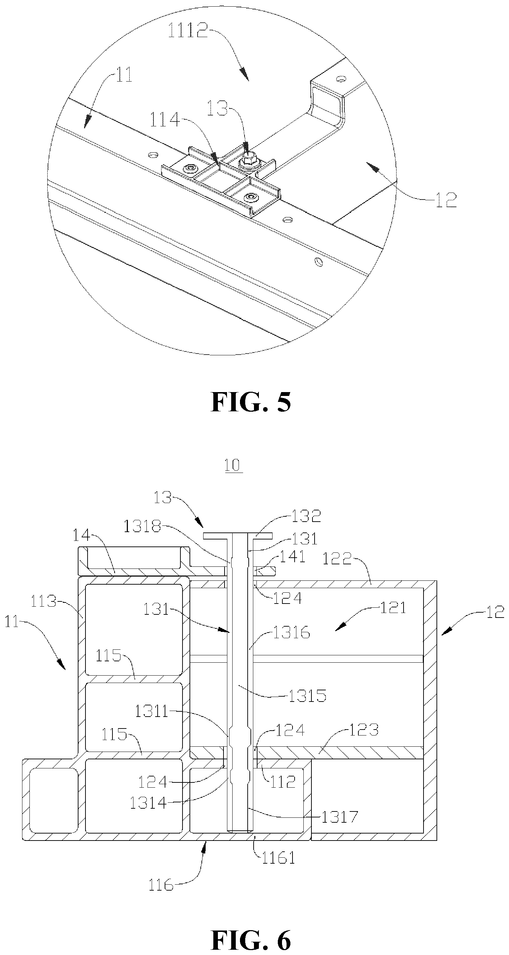

First member 11 further includes first supporting portion 116, and first supporting portion 116 is connected to an inner side of first contour portion 113 and located in accommodating space 111. First supporting portion 116 may be a hollow structure to reduce the weight of first member 11. Certainly, first supporting portion 116 may also be a solid structure. Fig. 6 shows a case where first supporting portion 116 is a hollow structure. Wherein a wall of first supporting portion 116 facing opening 1112 of accommodating space 111 is first connecting portion 112. One end of second member 12 is located on one side of first connecting portion 112 facing opening 1112 of accommodating space 111 and is supported by first connecting portion 112. First supporting portion 116 further has first abutting portion 1161 disposed opposite to first connecting portion 112.

Second member 12 has first hollow portion 121, and first wall 122 and second wall 123 are respectively located on two opposite sides of first hollow portion 121. First wall 122 is farther away from first connecting portion 112 than second wall 123, and second wall 123 and first connecting portion 112 are stacked and abut against each other. Under the action of riveting piece 13, second wall 123 and first connecting portion 112 are limited and locked in a stacking direction. Second wall 123 and first connecting portion 112 are locked, which means that riveting piece 13 keeps first connecting portion 112 and second wall 123 in a state of abutting against each other in the stacking direction.

First wall 122, second wall 123 and first limiting portion 1312 are provided with first insertion holes 124 arranged coaxially. Rivet body 131 is configured to sequentially pass through first wall 122, first hollow portion 121, second wall 123 and first connecting portion 112, which means that rivet body 131 is inserted from one side of first wall 122 facing away from second wall 123 and sequentially pass through first insertion hole 124 of first wall 122, first hollow portion 121, first insertion hole 124 of second wall 123 and first insertion hole 124 of first connecting portion 112. After rivet body 131 passes through first connecting portion 112, one end of rivet body 131 is displaced into first supporting portion 116 and abuts against one side of first abutting portion 1161 facing first connecting portion 112.

First limiting portion 1312 is located on one side of first connecting portion 112 facing away from second wall 123, in other words, first limiting portion 1312 is located in first supporting portion 116. First limiting portion 1312 is limited on one side of first connecting portion 112 facing away from second wall 123, so as to limit the separation and limitation of rivet body 131 in a direction approaching from second wall 123 to first wall 122.

First weak portion 1311 is located on one side of second wall 123 facing away from first connecting portion 112, in other words, first weak portion 1311 is located in first hollow portion 121. After axially applying force to rivet body 131 in the axial direction of rivet body 131, first weak portion 1311 protrudes in the radial direction of rivet body 131 to form second limiting portion 1313, and second limiting portion 1313 is limited on one side of second wall 123 facing away from first connecting portion 112, so as to limit rivet body 131 from moving in a direction approaching from first wall 122 to second wall 123. First limiting portion 1312 and second limiting portion 1313 jointly keep first connecting portion 112 and second wall 123 in a state of abutting against each other, so that first member 11 and second member 12 are connected as a whole by riveting piece 13.

Applying force to rivet body 131 to deform first weak portion 1311 into second limiting portion 1313 may be realized by pull riveting or press riveting. Stiffness of first weak portion 1311 is smaller than stiffness of other non-weak portions of rivet body 131, so that first weak portion 1311 is prone to being deformed when rivet body 131 is subjected to an axial force.

Therefore, riveting piece 13 of riveting assembly 10 can stretch into first hollow portion 121 and limit and lock second wall 123 and first connecting portion 112 in first hollow portion 121, thereby reducing a risk of relative shaking of first member 11 and second member 12 due to a gap between second wall 123 and first connecting portion 112, improving the connection stability between first member 11 and second member 12, and improving mounting stability of the box body and mounting bracket of the battery box. A size of first weak portion 1311 in a radial direction of rivet body 131 before deformation is smaller than a size after deformation, so that rivet body 131 can stretch into a relatively concealed space to realize locking, such as stretching into first hollow portion 121, so that an application range of riveting piece 13 is wider.

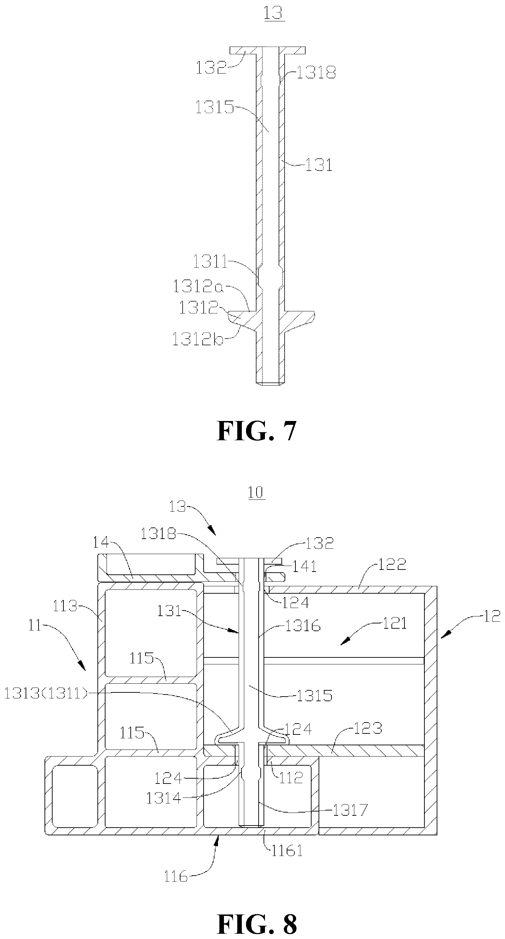

There are many ways to form first limiting portion 1312. For example, as shown in Fig. 7, first limiting portion 1312 is disposed on an outer peripheral surface of rivet body 131 and protrudes from the outer peripheral surface of rivet body 131 in the radial direction of rivet body 131. First limiting portion 1312 is an elastic member. First limiting portion 1312 has first limiting surface 1312a and first guiding surface 1312b, first limiting surface 1312a is located on one side of first limiting portion 1312 facing first weak portion 1311, and first guiding surface 1312b is located on one side of first limiting portion 1312 facing away from first weak portion 1311. Before the deformation of first limiting portion 1312, first limiting surface 1312a is a plane parallel to the radial direction of rivet body 131, and first guiding surface 1312b is an inclined plane gradually approaching first limiting surface 1312a in a direction of approaching from a central axis of rivet body 131 to the outer peripheral surface of rivet body 131. In a process that rivet body 131 is inserted into each first insertion hole 124, a hole wall of first insertion hole 124 extrudes first guiding surface 1312b, so as to drive first limiting portion 1312 to deform relative to rivet body 131, and an outer diameter of deformed first limiting portion 1312 is the same as a hole diameter of first insertion hole 124, so that first limiting portion 1312 can pass through each first insertion hole 124 smoothly. After first limiting portion 1312 is separated from the hole wall of first insertion hole 124, first limiting portion 1312 returns to its original shape, so that first limiting surface 1312 a is parallel to the radial direction of rivet body 131.

For another embodiment, as shown in Fig. 6, Fig. 8, and Fig. 9, rivet body 131 is further provided with second weak portion 1314, and second weak portion 1314 is configured to protrude in the radial direction of rivet body 131 when rivet body 131 is stressed in the axial direction of rivet body 131, so as to form first limiting portion 1312.

Axially applying force to rivet body 131 to make second weak portion 1314 protrude in the radial direction of rivet body 131 to form first limiting portion 1312, may refer to apply axial force to rivet body 131 by means of pull riveting or press riveting. Stiffness of second weak portion 1314 is smaller than stiffness of other non-weak portions of rivet body 131, so that second weak portion 1314 is prone to being deformed when rivet body 131 is subjected to the axial force.

Before deformation, the outer diameter of second weak portion 1314 is relatively small, which can ensure that rivet body 131 is inserted into each first insertion hole 124 in the direction approaching from first wall 122 to second wall 123, and is located in on one side of first connecting portion 112 facing away from second wall 123, that is, ensure that rivet body 131 sequentially passes through first wall 122, the first hollow portion, second wall 123 and first connecting portion 112. After the second weak portion 1314 is deformed to form the first limiting portion 1312, the outer diameter of the first limiting portion 1312 increases and is larger than the diameter of the first insertion hole 124 of the first connecting portion 112, so that the first limiting portion 1312 can function as a stop on the side of the first connecting portion 112 away from the second wall 123.

Since one end of rivet body 131 abuts against first abutting portion 1161, it is convenient to serve as a supporting point for press riveting. If the deformation of second weak portion 1314 is realized by press riveting, then along with the deformation of second weak portion 1314, first weak portion 1311 gradually moves towards the direction close to second wall 123, so that first weak portion 1311 is no longer located on one side of second wall 123 facing away from first connecting portion 112, and cannot play a limiting role on one side of second wall 123 facing away from first connecting portion 112 after deformation.

Based on this, in some embodiments, the stiffness of first weak portion 1311 is smaller than the stiffness of second weak portion 1314.

When rivet body 131 and first abutting portion 1161 abut against each other to serve as a supporting point, first weak portion 1311 deforms into second limiting portion 1313 by press riveting, and then second weak portion deforms into first limiting portion 1312 by pull riveting. Of course, in other embodiments, the deformation of first weak portion 1311 and second weak portion 1314 may also be realized by pull riveting.

The stiffness of first weak portion 1311 is smaller than the stiffness of second weak portion 1314, in a process of axially applying force to rivet body 131, first weak portion 1311 will deform prior to second weak portion 1314, and a distance between first weak portion 1311 and rivet body 131 in a direction approaching from first weak portion 1311 to second weak portion 1314 remains unchanged during the force application process, which facilitates the deformation of first weak portion 1311 of rivet body 131 into second limiting portion 1313 by press riveting, thereby facilitating rivet of first member 11 and second member 12 through riveting piece 13.

Multiple ways may be adopted to realize that the stiffness of first weak portion 1311 is smaller than the stiffness of second weak portion 1314. In some embodiments, a wall thickness of first weak portion 1311 is smaller than a wall thickness of second weak portion 1314, so that the stiffness of first weak portion 1311 is smaller than the stiffness of second weak portion 1314.

In this embodiment, rivet body 131 has second hollow portion 1315. In the axial direction of rivet body 131, second hollow portion 1315 penetrates through two axial ends of rivet body 131, so that a riveting tool penetrates from second hollow portion 1315 to axially apply force to rivet body 131.

Both first weak portion 1311 and second weak portion 1314 are parts that forms the wall of rivet body 131. The wall thickness of first weak portion 1311 and the wall thickness of second weak portion 1314 both refer to the sizes of first weak portion 1311 and second weak portion 1314 in the radial direction of rivet body 131 before deformation. Both the wall thickness of first weak portion 1311 and the wall thickness of second weak portion 1314 are smaller than the wall thickness of other non-weak portions of rivet body 131.

In some other embodiments, it is also possible to make the stiffness of the material used for first weak portion 1311 and second weak portion 1314 is smaller than the stiffness of the materials of other non-weak portions of rivet body 131 by changing the materials of first weak portion 1311 and second weak portion 1314. Moreover, the stiffness of the material of first weak portion 1311 is smaller than the stiffness of the material of second weak portion 1314.

By setting the wall thickness of first weak portion 1311 to be smaller than the wall thickness of second weak portion 1314, the stiffness of first weak portion 1311 is smaller than the stiffness of second weak portion 1314, which facilitates the manufacture and molding of rivet body 131 of riveting piece 13.

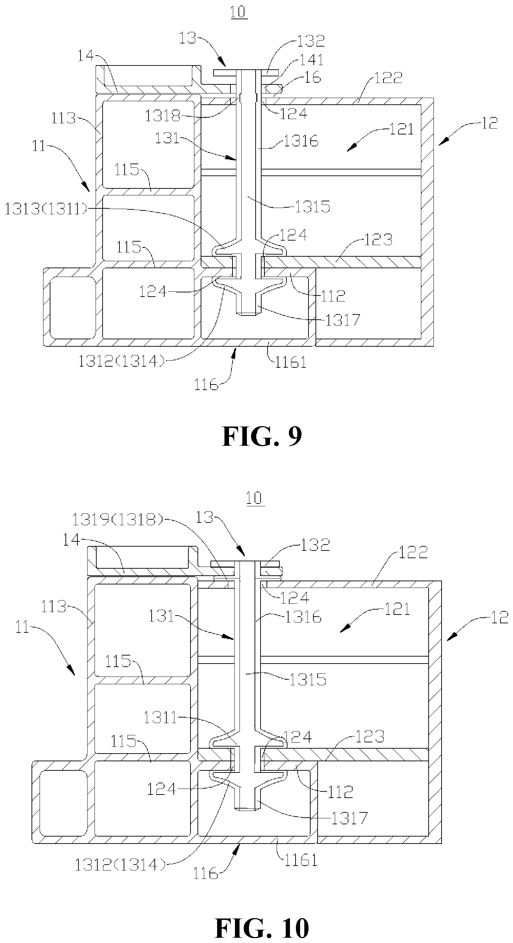

In order to facilitate performing pull riveting on rivet body 131, please continue to refer to Fig. 8 and Fig. 9, In some embodiments, rivet body 131 includes body portion 1316 and riveting portion 1317, first weak portion 1311 and first limiting portion 1312 are both disposed on body portion 1316, and riveting portion 1317 is connected to body portion 1316 and is located on one side of first limiting portion 1312 facing away from first weak portion 1311; and rivet body 131 has second hollow portion 1315, and riveting portion 1317 is used for cooperating with the pull riveting tool passing through second hollow portion 1315.

Riveting portion 1317 is located on one side of first limiting portion 1312 facing away from first weak portion 1311, and one end of riveting portion 1317 abuts against first abutting portion 1161, so that second weak portion 1314 of rivet body 131 deforms through pull riveting. Second hollow portion 1315 penetrates through body portion 1316 and riveting portion 1317, and riveting portion 1317 is used to cooperate with a pull riveting tool passing through second hollow portion 1315, so as to axially apply the force to rivet body 131. Moreover, the riveting tool penetrates into second hollow portion 1315 to cooperate with riveting portion 1317, and no additional riveting space is required to be set.

There are many ways for riveting portion 1317 to cooperate with the pull riveting tool. In some embodiments, riveting portion 1317 is provided with an internal thread (not shown in the figure) for being connected with the pull riveting tool (not shown in the figure).

The internal thread is disposed in second hollow portion 1315 and located on an inner surface of riveting portion 1317. The part where the pull riveting tool penetrates into second hollow portion 1315 is provided with an external thread, and the external thread is in threaded fit with the internal thread of riveting portion 1317 to realize the connection between riveting portion 1317 and the pull riveting tool.

In some other embodiments, riveting portion 1317 and the pull riveting tool may also be matched in other ways. For example, the inner surface of riveting portion 1317 is provided with a first snap-fit portion (not shown in the figure), and the pull riveting tool is provided with a second snap-fit portion (not shown in the figure) for being in snap fit with the first snap-fit portion. The first snap-fit portion may be a concave portion, and the second snap-fit portion may be a protrusion that can be snapped into the concave portion.

The internal thread of riveting portion 1317 is in threaded fit with the external thread of the pull riveting tool, so that the connection between riveting portion 1317 and the pull riveting tool is more convenient.

Please continue to refer to Fig. 8 and Fig. 9, In some embodiments, riveting assembly 10 further includes third member 14, and third member 14 is located on one side of first wall 122 facing away from second wall 123; and riveting portion 13 further includes flange portion 132, and flange portion 132 is connected to one end of rivet body 131 and is located on one side of third member 14 facing away from first wall 122.

One end of third member 14 is fixed with first member 11, and third member 14 extends to one side of first wall 122 facing away from second wall 123. A part where third member 14 extends to one side of first wall 122 facing away from second wall 123 is provided with second insertion hole 141, and second insertion hole 141 is coaxial with first insertion hole 124 on first wall 122. Rivet body 131 sequentially pass through second insertion hole 141 of third member 14, first insertion hole 124 of first wall 122, first insertion hole 124 of second wall 123 and an insertion hole of first connecting portion 112. Flange portion 132 is connected to one end of body portion 1316 facing away from riveting portion 1317, and is located on one side of third member 14 facing away from first wall 122. The outer diameter of flange portion 132 is greater than the hole diameter of second insertion hole 141, so that flange portion 132 cannot pass through second insertion hole 141.

Third member 14 is located on one side of first wall 122 facing away from second wall 123, and third member 14 can play a limiting role on second member 12 on one side of first wall 122 facing away from second wall 123. Flange portion 132 of riveting piece 13 is located on one side of third member 14 facing away from first wall 122, the outer diameter of flange portion 132 is greater than the outer diameter of second insertion hole 141, flange portion 132 can play a limiting role on third member 14, and the cooperation between flange portion 132 and first limiting portion 1312 can limit second member 12 between third member 14 and first connecting portion 112 of first member 11, and can improve the connection stability between first member 11 and second member 12.

In some cases, there is no abutment between first wall 122 and third member 14 in the axial direction of rivet body 131 but there is gap 16, which leads to a risk of shaking between second member 12 and third member 14.

Based on this, please continue to refer to Fig. 9 and Fig. 10, In some embodiments, rivet body 131 further includes third weak portion 1318, the third weak portion 1318 is configured to protrude in the radial direction of rivet body 131 when rivet body 131 is stressed in the axial direction to form third limiting portion 1319, and third limiting portion 1319 is configured to fill gap 16 between first wall 122 and third member 14.

Filling gap 16 between first wall 122 and third member 14 by third limiting portion 1319 may be completely filled, that is, the size of third limiting portion 1319 in the axial direction of rivet body 131 is the same as the size of gap 16 between first wall 122 and third member 14 in the axial direction of rivet body 131. Filling gap 16 between first wall 122 and third member 14 by third limiting portion 1319 may be partially filled, that is, the size of third limiting portion 1319 in the axial direction of rivet body 131 is smaller than the size of gap 16 between first wall 122 and third member 14 in the axial direction of rivet body 131.

Third weak portion 1318 deforms to form third limiting portion 1319, and third limiting portion 1319 fills gap 16 between first wall 122 and third member 14, so that the possibility of movement of third member 14 and first wall 122 in the axial direction of rivet body 131 is small, and the stability of the connection among first member 11, second member 12 and third member 14 is improved.

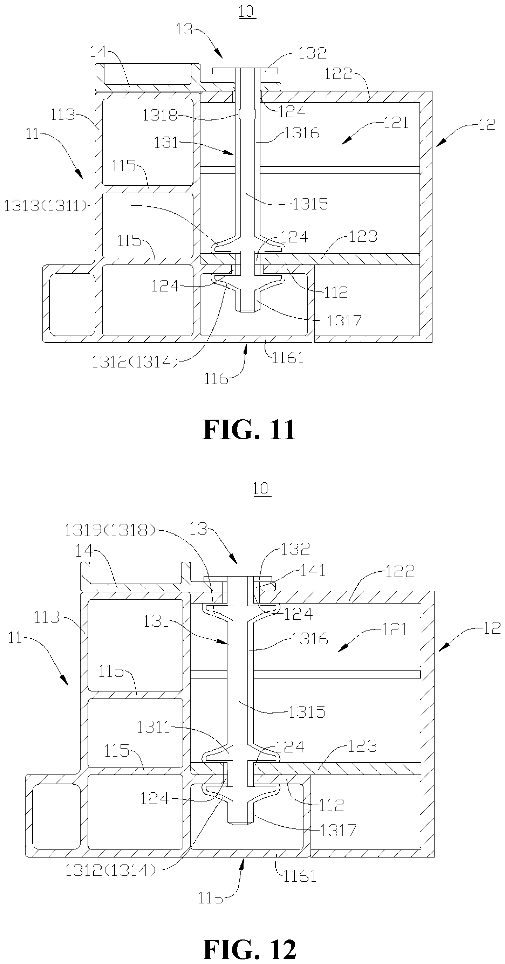

In some other embodiments, as shown in Fig. 11 and Fig. 12, rivet body 131 further has third weak portion 1318, and third weak portion 1318 is configured to protrude in the radial direction of rivet body 131 when rivet body 131 is stressed in the axial direction, so as to form third limiting portion 1319, so that third member 14 and first wall 122 are connected between flange portion 132 and third limiting portion 1319.

The outer diameter of third limiting portion 1319 is greater than the hole diameter of first insertion hole 124 on first wall 122, and third limiting portion 1319 can limit first connecting portion 112 on one side of first wall 122 facing away from it, and cooperate with flange portion 132 to form a limiting space for first wall 122 and third member 14. Regardless of whether there is gap 16 between first wall 122 and third member 14 in the axial direction of rivet body 131, third limiting portion 1319 and flange portion 132 cooperate to jointly limit first wall 122 and third member 14, which can reduce or avoided the risk of movement of second member 12 relative to third member 14, thereby improving connection stability between first wall 122 and third member 14. Moreover, flange portion 132, the third limiting portion, first limiting portion 1312 and second limiting portion 1313 work together to improve the connection stability among first member 11, second member 12 and third member 14.

In some embodiments, the stiffness of third weak portion 1318 is greater than the stiffness of second weak portion 1314.

The stiffness of third weak portion 1318 and second weak portion 1314 refers to the ability of third weak portion 1318 and second weak portion 1314 to resist deformation respectively. The greater the stiffness, the stronger the deformation resistance, and vice versa. The stiffness of third weak portion 1318 is greater than the stiffness of second weak portion 1314, and the deformation resistance of third weak portion 1318 is stronger than that of second weak portion 1314. A relationship of the stiffness among first weak portion 1311, second weak portion 1314 and third weak portion 1318 is: the stiffness of first weak portion 1311 is smaller than the stiffness of second weak portion 1314, and the stiffness of second weak portion 1314 is smaller than the stiffness of third weak portion 1318.

In a process of axially applying force to rivet body 131 and second weak portion 1314 deforming into first limiting portion 1312, third weak portion 1318 may not be deformed, or may be deformed. In an embodiment where third limiting portion 1319 deformed from third weak portion 1318 fills gap 16 between first wall 122 and third member 14, in a process of deforming first weak portion 1311 by press riveting, one end of rivet body 131 provided with flange portion 132 moves in a direction of approaching from first wall 122 to second wall 123, third weak portion 1318 also moves in the direction of approaching from first wall 122 to second wall 123, third weak portion 1318 is not deformed, and then the third limiting portion can pass through second insertion hole 141 smoothly and be located between third member 14 and first wall 122. If third weak portion 1318 deforms in the deformation process of first weak portion 1311, deformed third limiting portion 1319 cannot be located between third member 14 and first wall 122 to fill gap 16 between third member 14 and first wall 122.

In an embodiment in which first wall 122 and third member 14 are limited between third limiting portion 1319 and flange portion 132 by third limiting portion 1319 deformed from third weak portion 1318 and flange portion 132, in the process of deforming first weak portion 1311 by press riveting, one end of rivet body 131 provided with flange portion 132 moves in the direction of approaching from first wall 122 to second wall 123. Although third weak portion 1318 also moves in the direction of approaching from first wall 122 to second wall 123, only deformed third limiting portion 1319 is still located on one side of third member 14 facing away from first wall 122, no matter whether third weak portion 1318 deforms in the wall deformation process of first weak portion 1311, third limiting portion 1319 deformed from third weak portion 1318 and flange portion 132 can jointly limit first wall 122 and third member 14.

The stiffness of second weak portion 1314 is smaller than the stiffness of third weak portion 1318, in a process of axially applying force to rivet body 131, second weak portion 1314 will deform prior to third weak portion 1318, so that second limiting portion 1313 formed by deforming of first weak portion 1311 is limited on one side of second wall 123 facing away from first connecting portion 112, and second limiting portion 1313 can abut against one side of second wall 123 facing away from first connecting portion 112, and can provide support for press riveting of riveting piece 13, thereby facilitating the press riveting of riveting piece 13 to make third weak portion 1318 deform into third limiting portion 1319.

Multiple ways may be adopted to realize that the stiffness of second weak portion 1314 is smaller than the stiffness of third weak portion 1318. In some embodiments, the wall thickness of third weak portion 1318 is greater than the wall thickness of second weak portion 1314, so that the stiffness of third weak portion 1318 is greater than the stiffness of second weak portion 1314.

Third weak portion 1318 is a part that forms the wall of rivet body 131. The wall thickness of third weak portion 1318 refers to the size of third weak portion 1318 in the radial direction of rivet body 131 before deformation. The wall thickness of third weak portion 1318 is smaller than the wall thickness of other non-weak portions of rivet body 131. The wall thickness of third weak portion 1318 is greater than the wall thickness of first weak portion 1311 and the wall thickness of second weak portion 1314.

In some other embodiments, it is also possible to make the stiffness of the material used for third weak portion 1318 is smaller than the stiffness of materials of other non-weak portions of rivet body 131 by changing the materials of third weak portion 1318. Moreover, the stiffness of the material of third weak portion 1318 is greater than the stiffness of the material of second weak portion 1314.

By setting the wall thickness of second weak portion 1314 to be smaller than the wall thickness of third weak portion 1318, the stiffness of second weak portion 1314 is smaller than the stiffness of third weak portion 1318, which facilitates the manufacture and molding of rivet body 131 of riveting piece 13.

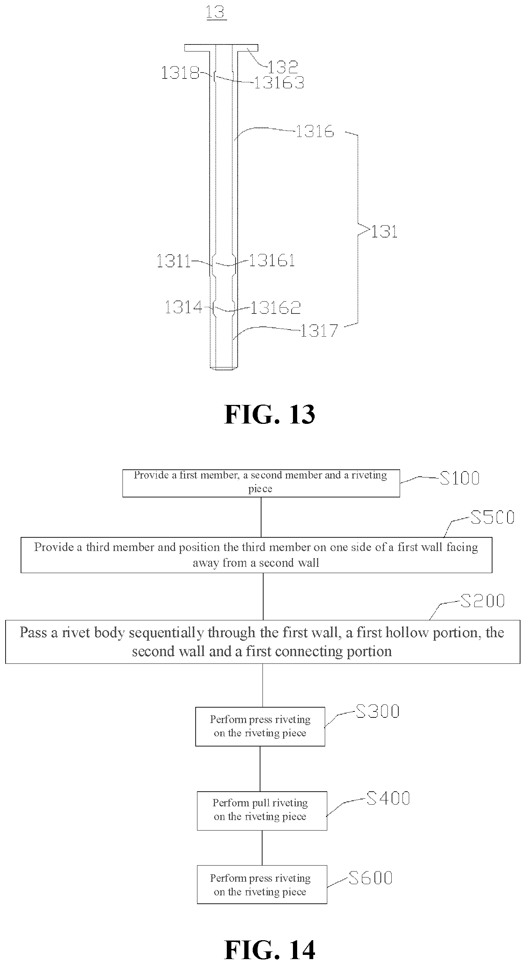

Please continue to refer to Fig. 13, In some embodiments, rivet body 131 has second hollow portion 1315, the inner surface of the rivet body 131 is provided with first groove 13161, and rivet body 131 forms first weak portion 1311 in the area of first groove 13161.

First groove 13161 is disposed on the inner surface of body portion 1316 of rivet body 131, and first groove 13161 is disposed, so that the wall thickness of the position corresponding to first groove 13161 is relatively small, and first weak portion 1311 is formed in first groove 13161, so that the wall thickness of first weak portion 1311 is smaller than the wall thickness of other non-weak portions of rivet body 131. Of course, first groove 13161 may also be disposed on the outer surface of body portion 1316, or first grooves 13161 may be disposed on both the inner surface and the outer surface of body portion 1316, and first grooves 13161 on the inner surface and the outer surface of rivet body 131 are oppositely disposed.

The inner surface of rivet body 131 is provided with first groove 13161, so that the wall thickness of the area of first groove 13161 is smaller than the wall thickness of other non-weak portions of rivet body 131, so that the area of first groove 13161 correspondingly forms first weak portion 1311, and a forming mode of first weak portion 1311 is simple, thereby reducing the manufacturing difficulty of riveting piece 13.

Please continue to refer to Fig. 13, In some embodiments, first groove 13161 is a closed structure extending in a circumferential direction of rivet body 131.

The closed structure refers to first grooves 13161 connected end-to-end in the circumferential direction of rivet body 131.

First groove 13161 is the closed structure extending in the circumferential direction of rivet body 131, then first weak portion 1311 can protrude along the periphery and form closed second limiting portion 1313 extending in the circumferential direction of rivet body 131, which can better play a limiting role on second wall 123.

Please continue to refer to Fig. 13, the inner surface of rivet body 131 is further provided with second groove 13162 and third groove 13163. Rivet body 131 forms second weak portion 1314 in the area of second groove 13162. Of course, second groove 13162 may also be disposed on the outer surface of rivet body 131, or second grooves 13162 may be disposed on both the inner surface and the outer surface of rivet body 131, and second grooves 13162 on the inner surface and the outer surface of rivet body 131 are oppositely disposed. Rivet body 131 forms third weak portion 1318 in the area of third groove 13163. Of course, third groove 13163 may also be disposed on the outer surface of rivet body 131, or third grooves 13163 may be disposed on both the inner surface and the outer surface of rivet body 131, and third grooves 13163 on the inner surface and the outer surface of rivet body 131 are oppositely disposed.

In order to make the stiffness of first weak portion 1311 smaller than the stiffness of second weak portion 1314, and the stiffness of second weak portion 1314 smaller than the stiffness of third weak portion 1318, a sum of the depths of first grooves 13161 is greater than a sum of depths of second grooves 13162, and the sum of the depths of second grooves 13162 is greater than the sum of depths of third grooves 13163.

Second grooves 13162 may be a closed structure extending in the circumferential direction of rivet body 131, and third grooves 13163 may be a closed structure extending in the circumferential direction of rivet body 131.

In some embodiments, riveting assembly 10 is a battery box, first member 11 is formed with accommodating space 111 for battery cell 20, second member 12 is accommodated in accommodating space 111, and second member 12 is used to divide accommodating space 111 into subspace 1111 for accommodating battery cell 20.

First member 11 is the box body of the battery box, and second member 12 is the mounting bracket of the battery box.

Riveting piece 13 of the battery box can stretch into first hollow portion 121 and limit and lock second wall 123 and first connecting portion 112 in first hollow portion 121, thereby reducing a risk of relative shaking of first member 11 and second member 12 due to gap 16 between second wall 123 and first connecting portion 112, improving the connection stability between the box body and the mounting bracket, and improving mounting stability of battery cell 20 mounted in subspace 1111.

An embodiment of the present application further provides battery 100, including battery cell 20 and the battery box provided by the above embodiments.

There may be one or more battery cells 20, and "a plurality of" refers to two or more than two. Battery cell 20 is accommodated in accommodating space 111 of first member 11 of the battery box, and is located in subspace 1111 defined by first member 11 and second member 12.

Battery 100 includes the battery box provided by the above embodiment, so that the connection relationship between a box body of the battery box and a mounting bracket is stable, thereby improving mounting stability of battery cell 20 in the battery box.

An embodiment of the present application provides electrical equipment, including battery 100 provided by the above embodiments.

As shown in Fig. 14, an embodiment of the present application provides an assembling method of riveting assembly 10, including:

S100, providing first member 11, second member 12 and riveting piece 13, wherein first member 11 has first connecting portion 112; second member 12 has first hollow portion 121, second member 12 has first wall 122 and second wall 123 opposed to each other, and first connecting portion 112 is located on one side of second wall 123 facing away from first wall 122; and riveting piece 13 includes rivet body 131, and in an axial direction of rivet body 131, rivet body 131 has first weak portion 1311 and first limiting portion 1312 which are disposed at intervals;

S200, sequentially passing rivet body 131 through first wall 122, first hollow portion 121, second wall 123 and first connecting portion 112; and

S300, performing press riveting on riveting piece 13, so that first weak portion 1311 protrudes in a radial direction of rivet body 131 to form second limiting portion 1313, and first connecting portion 112 and second wall 123 are connected between first connecting portion 1312 and second limiting portion 1313.

In step S200, when rivet body 131 sequentially passes through first wall 122, second wall 123, and first connecting portion 112, one end of riveting portion 1317 of rivet body 131 abuts against first abutting portion 1161 of first supporting portion 116, first weak portion 1311 is located on one side of second wall 123 facing away from first connecting portion 112, and first limiting portion 1312 is located on one side of first connecting portion 112 facing away from second wall 123. Taking an abutting position of rivet body 131 and first abutting portion 1161 as a supporting force point, first weak portion 1311 deforms into second limiting portion 1313 by performing press riveting on rivet body 131.

A limiting space is formed between first limiting portion 1312 and second limiting portion 1313 to lock second wall 123 and first connecting portion 112 so as to realize the connection between first member 11 and second member 12. Therefore, this method makes riveting piece 13 be able to stretch into first hollow portion 121 and limit and lock second wall 123 and first connecting portion 112 in first hollow portion 121, thereby reducing a risk of relative shaking of first member 11 and second member 12 due to gap 16 between second wall 123 and first connecting portion 112, and improving the connection stability between first member 11 and second member 12. Moreover, riveting piece 13 can stretch into a relatively concealed space to realize locking, such as stretching into first hollow portion 121, so that an application range of riveting piece 13 is wider.

Please continue to refer to Fig. 14, In some embodiments, rivet body 131 is further provided with second weak portion 1314.

The assembling method of riveting assembly 10 further includes:

S400, performing pull riveting on riveting piece 13, so that second weak portion 1314 protrudes in a radial direction of rivet body 131 to form first limiting portion 1312.

In step S200, after rivet body 131 sequentially passes through first wall 122, second wall 123, and first connecting portion 112, second weak portion 1314 is located on one side of first connecting portion 112 facing away from second wall 123. After step S300 is executed, that is, after first weak portion 1311 deforms into second limiting portion 1313 by press riveting, step S400 is executed, a pull riveting tool is inserted into second hollow portion 1315 of rivet body 131, and cooperates with riveting portion 1317, the pull riveting tool is used to perform pull riveting on rivet body 131, so that second weak portion 1314 deforms into first limiting portion 1312.

In a process that second weak portion 1314 deforms to form first limiting portion 1312, one end of rivet body 131 in a direction approaching from first weak portion 1311 to first limiting portion 1312 will move toward a direction close to first connecting portion 112, by performing pull riveting on riveting piece 13, it is possible to adapt to the movement of the end of rivet body 131, thereby ensuring that second weak portion 1314 deforms into reliable first limiting portion 1312.

Please continue to refer to Fig. 14, In some embodiments, riveting assembly 10 further includes third member 14.

The assembling method of riveting assembly 10 further includes:
S500, providing third member 14, and positioning third member 14 on one side of first wall 122 facing away from second wall 123.

Riveting piece 13 further includes flange portion 132, flange portion 132 is connected to one end of rivet body 131 and is located on one side of third member 14 facing away from first wall 122, rivet body 131 further includes third weak portion 1318, and third weak portion 1318 is disposed closer to flange portion 132 relative to first weak portion 1311.

The assembling method of riveting assembly 10 further includes:
S600, performing press riveting on riveting piece 13, so that third weak portion 1318 protrudes in the radial direction of rivet body 131 to form third limiting portion 1319, and third limiting portion 1319 is configured to fill gap 16 between first wall 122 and third member 14, or third limiting portion 1319 is configured to cooperate with flange portion 132 to connect third member 14 and first wall 122 between flange portion 132 and third limiting portion 1319.

In step S500, one end of third member 14 is connected to second member 12, and a part of second member 12 extends to one side of first wall 122 facing away from second wall 123.

In step S200, rivet body 131 sequentially passes through third member 14, first wall 122, second wall 123 and first connecting portion 112, and flange portion 132 is located on one side of third member 14 facing away from first wall 122. Step S600 is executed after step S400, because first weak portion 1311 and second weak portion 1314 respectively deforms into second limiting portion 1313 and first limiting portion 1312, second limiting portion 1313 and second wall 123 abut against each other to be capable of serving as a supporting force point for deforming third weak portion 1318 by press riveting.

By performing press riveting on riveting piece 13, it is convenient for a riveting tool to apply an axial force to riveting piece 13, thereby improving the assembling convenience and assembling efficiency. Third limiting portion 1319 fills gap 16 between first wall 122 and third member 14 or third limiting portion 1319 and flange portion 132 jointly limit first wall 122 and third member 14, both of which can reduce the risk of shaking of first wall 122 and third member 14 in the axial direction of rivet body 131, thereby improving the mounting stability of first wall 122 and third member 14.

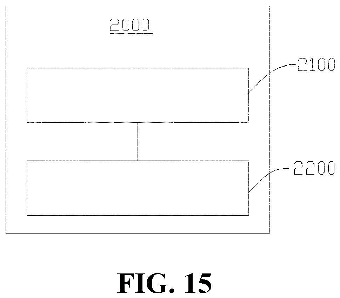

As shown in Fig. 15, an embodiment of the present application further provides assembling equipment 2000 of a riveting assembly. Assembling equipment 2000 of the riveting assembly includes a providing apparatus 2100 and an assembling apparatus 2200. The providing apparatus 2100 is configured to provide first member 11, second member 12 and riveting piece 13; first member 11 has first connecting portion 112; second member 12 has first hollow portion 121, second member 12 has first wall 122 and second wall 123 opposed to each other, and first connecting portion 112 is location on one side of second wall 123 facing away from first wall 122; riveting piece 13 includes rivet body 131, and in an axial direction of rivet body 131, rivet body 131 has first weak portion 1311 and first limiting portion 1312 which are disposed at intervals; and assembling apparatus 2200 is configured to sequentially pass rivet body 131 through first wall 122, first hollow portion 121, second wall 123 and first connecting portion 112, and apply force in an axial direction of rivet body 131, so that first weak portion 1311 protrudes in a radial direction of rivet body 131 to form first limiting portion 1312, and first connecting portion 112 and second wall 123 are connected between first limiting portion 1312 and second limiting portion 1313.

An embodiment of the present application provides riveting assembly 10. Riveting assembly 10 includes first member 11, second member 12, riveting piece 13 and third member 14.

First member 11 has first connecting portion 112. Second member 12 has first hollow portion 121, second member 12 has first wall 122 and second wall 123 opposed to each other, first connecting portion 112 is located on one side of second wall 123 facing away from first wall 122, and third member 14 and first member 11 extend to one side of first wall 122 facing away from second wall 123. Riveting piece 13 includes rivet body 131 and flange portion 132. Rivet body 131 includes body portion 1316 and riveting portion 1317. Riveting portion 1317 is connected to one end of body portion 1316, and flange portion 132 is connected to one end of body portion 1316 facing away from riveting portion 1317. Body portion 1316 of rivet body 131 is sequentially provided with third weak portion 1318, first weak portion 1311 and second weak portion 1314 in a direction approaching from flange portion 132 to riveting portion 1317. A stiffness of third weak portion 1318 is greater than a stiffness of second weak portion 1314. The stiffness of second weak portion 1314 is greater than a stiffness of first weak portion 1311. Rivet body 131 sequentially passes through third member 14, first wall 122, first hollow portion 121, second wall 123 and first connecting portion 112, so that first weak portion 1311 is located in first hollow portion 121 and located on one side of second wall 123 facing away from first connecting portion 112, and second weak portion 1314 is located on one side of first connecting portion 112 facing away from second wall 123. Press riveting is performed on riveting piece 13 first, so that first weak portion 1311 protrudes in a radial direction of rivet body 131 to deform into second limiting portion 1313, and then a pull riveting tool is inserted into second hollow portion 1315 of rivet body 131, and is in threaded fit with riveting portion 1317. Pull riveting is performed on riveting piece 13 through the pull riveting tool, so that second weak portion 1314 protrudes in the radial direction of rivet body 131 and deforms into first limiting portion 1312. First limiting portion 1312 and second limiting portion 1313 jointly limit and lock second wall 123 and first connecting portion, so as to realize the connection between first member 11 and second member 12. After performing press riveting on riveting piece 13 to make third weak portion 1318 protrude in the radial direction of rivet body 131 to deform into third limiting portion 1319, the third limiting portion 1319 fills gap 16 between first wall 122 and third member 14 or third limiting portion 1319 and flange portion 132 together limit first wall 122 and third member 14. Therefore, riveting piece 13 can connect first member 11, second member 12 and third member 14 into a whole, thereby reducing a risk of movement of second member 12 relative to the first member 11, and improving the connection stability between first member 11 and second member 12. Therefore, riveting piece 13 can stretch into first hollow portion 121 and limit and lock second wall 123 and first connecting portion 112 in first hollow portion 121, thereby reducing a risk of relative shaking of first member 11 and second member 12 due to a gap between second wall 123 and first connecting portion 112, and improving the connection stability between first member 11 and second member 12. Moreover, riveting piece 13 can stretch into a relatively concealed space to realize locking, such as stretching into first hollow portion 121, so that an application range of riveting piece 13 is wider.

The above are only preferred embodiments of the present application, and are not intended to limit the present application. For those skilled in the art, the present application may have various modifications and changes. Any modifications, equivalent replacements, improvements, etc. made within the spirit and principle of the present application shall be included within the scope of protection of the present application.

## Claims

1. A riveting assembly, comprising:
a first member, having a first connecting portion;
a second member, having a first hollow portion, and having a first wall and a second wall opposed to each other; and
a riveting piece, comprising a rivet body configured to sequentially pass through the first wall, the first hollow portion, the second wall and the first connecting portion, the first connecting portion being located on one side of the second wall facing away from the first wall;
wherein in an axial direction of the rivet body, the rivet body has a first weak portion and a first limiting portion which are disposed at intervals, and the first weak portion is configured to protrude in a radial direction of the rivet body when the rivet body is stressed in the axial direction of the rivet body, so as to form a second limiting portion located in the first hollow portion, so that the first connecting portion and the second wall are connected between the first limiting portion and the second limiting portion.

2. The riveting assembly according to claim 1, wherein the rivet body is further provided with a second weak portion, and the second weak portion is configured to protrude in the radial direction of the rivet body when the rivet body is stressed in the axial direction of the rivet body, so as to form the first limiting portion.

3. The riveting assembly according to claim 2, wherein a stiffness of the first weak portion is smaller than a stiffness of the second weak portion.

4. The riveting assembly according to claim 3, wherein a wall thickness of the first weak portion is smaller than a wall thickness of the second weak portion, so that the stiffness of the first weak portion is smaller than the stiffness of the second weak portion.

5. The riveting assembly according to any one of claims 1-4, wherein the rivet body comprises a body portion and a riveting portion, the first weak portion and the first limiting portion are both disposed on the body portion, and the riveting portion is connected to the body portion and located on one side of the first limiting portion facing away from the first weak portion; and
the rivet body has a second hollow portion, and the riveting portion is used to cooperate with a pull riveting tool passing through the second hollow portion.

6. The riveting assembly according to claim 5, wherein the riveting portion is provided with an internal thread for being connected with the pull riveting tool.

7. The riveting assembly according to any one of claims 2-6, further comprising a third member, wherein the third member is located on one side of the first wall facing away from the second wall; and
the riveting piece further comprises a flange portion, and the flange portion is connected to one end of the rivet body and located on one side of the third member facing away from the first wall.

8. The riveting assembly according to claim 7, wherein the rivet body further comprises a third weak portion, the third weak portion is configured to protrude in the radial direction of the rivet body when the rivet body is stressed in the axial direction, so as to form a third limiting portion, and the third limiting portion is configured to fill a gap between the first wall and the third member.

9. The riveting assembly according to claim 7, wherein the rivet body further has a third weak portion, and the third weak portion is configured to protrude in the radial direction of the rivet body when the rivet body is stressed in the axial direction, so as to form a third limiting portion, so that the third member and the first wall are connected between the flange portion and the third limiting portion.

10. The riveting assembly according to any one of claims 8-9, wherein a stiffness of the third weak portion is greater than the stiffness of the second weak portion.

11. The riveting assembly according to claim 10, wherein a wall thickness of the third weak portion is greater than the wall thickness of the second weak portion, so that the stiffness of the third weak portion is greater than the stiffness of the second weak portion.

12. The riveting assembly according to any one of claims 1-11, wherein the rivet body has a second hollow portion, an inner surface of the rivet body is provided with a first groove, and the rivet body forms the first weak portion in an area of the first groove.

13. The riveting assembly according to claim 12, wherein the first groove is a closed structure extending in a circumferential direction of the rivet body.

14. The riveting assembly according to any one of claims 1-13, wherein the riveting assembly is a battery box, the first member is formed with an accommodating space for a battery cell, the second member is accommodated in the accommodating space, and the second member is used to divide the accommodating space into a subspace accommodating the battery cell.

15. A battery, comprising:
a battery cell; and
the riveting assembly according to claim 14, wherein the battery cell is accommodated in the subspace.

16. Electrical equipment, comprising the battery according to claim 15.

17. An assembling method of a riveting assembly, comprising:
providing a first member, a second member and a riveting piece, wherein the first member has a first connecting portion; the second member has a first hollow portion, the second member has a first wall and a second wall opposed to each other, and the first connecting portion is located on one side of the second wall facing away from the first wall; and the riveting piece includes a rivet body, and in an axial direction of the rivet body, the rivet body has a first weak portion and a first limiting portion which are disposed at intervals;
passing the rivet body sequentially through the first wall, the first hollow portion, the second wall and the first connecting portion; and
performing press riveting on the riveting piece, so that the first weak portion protrudes in a radial direction of the rivet body to form a second limiting portion, and thus the first connecting portion and the second wall are connected between the first limiting portion and the second limiting portion.

18. The assembling method of the riveting assembly according to claim 17, wherein the rivet body is further provided with a second weak portion; and
The assembling method of the riveting assembly further includes:
performing pull riveting on the riveting piece, so that the second weak portion protrudes in the radial direction of the rivet body to form the first limiting portion.

19. The assembling method of the riveting assembly according to claim 18, wherein the riveting assembly further comprises a third member;
The assembling method of the riveting assembly further includes:
providing the third member and positioning the third member on one side of the first wall facing away from the second wall.
The riveting piece further includes a flange portion, the flange portion is connected to one end of the rivet body and located on one side of the third member facing away from the first wall, the rivet body further includes a third weak portion, the third weak portion is disposed close to the flange portion relative to the first weak portion.
The assembling method of the riveting assembly further includes:
performing press riveting on the riveting piece, so that the third weak portion protrudes in the radial direction of the rivet body to form a third limiting portion, wherein the third limiting portion is configured to fill a gap between the first wall and the third member, or the third limiting portion is configured to cooperate with the flange portion to connect the third member and the first wall between the flange portion and the third limiting portion.

20. Assembling equipment of a riveting assembly, comprising:
a providing apparatus, configured to provide a first member, a second member and a riveting piece, wherein the first member has a first connecting portion; the second member has a first hollow portion, the second member has a first wall and a second wall opposed to each other, and the first connecting portion is located on one side of the second wall facing away from the first wall; and the riveting piece comprises a rivet body, and in an axial direction of the rivet body, the rivet body has a first weak portion and a first limiting portion which are disposed at intervals; and
an assembling apparatus, configured to sequentially pass the rivet body through the first wall, the first hollow portion, the second wall and the first connecting portion and apply force in the axial direction of the rivet body, so that the first weak portion protrudes in a radial direction of the rivet body to form a first limiting portion, and the first connecting portion and the second wall are connected between the first limiting portion and the second limiting portion.
